# EUROPÄISCHE PATENTSCHRIFT

(11) **EP 1 944 664 B1**
(45) Veröffentlichungstag und Bekanntmachung des Hinweises auf die Patenterteilung: **14.07.2010**
(21) Anmeldenummer: 07000379.3
(22) Anmeldetag: 09.01.2007
(51) Int. Cl.: G05B 19/042, G05B 19/05, G05B 19/418, G05B 23/02, G06F 17/00, G06F 17/30

(54) **Verfahren zur Fehlersuche in einem Automatisierungsgerät**
Troubleshooting method for an automation controller
Procédé de diagnostic d'erreurs dans un automate programmable

(43) Veröffentlichungstag der Anmeldung: 16.07.2008
(73) Patentinhaber: SIEMENS AKTIENGESELLSCHAFT, 80333 München (DE)
(72) Erfinder: Rosskopf, Harald, 76327 Pfinztal-Wöschbach (DE)

(56) Entgegenhaltungen:
- WO-A1-2006/108207
- GB-A- 2 404 457
- US-A- 5 400 246
- US-A- 2005 119 771
- US-A1- 2003 195 934
- US-A1- 2004 103 072
- US-A1- 2005 262 236

## Beschreibung

Die vorliegende Erfindung betrifft ein Verfahren zum Betrieb eines Automatisierungsgerätes zum Erhalt von Informationen zu einem als Automatisierungslösung zur Steuerung und Überwachung eines technischen Prozesses vorgesehenen Steuerungsprogramm. Automatisierungslösungen und Steuerungsprogramme der eingangs genannten Art sind allgemein bekannt. Mitunter werden die Begriffe, so auch im Folgenden, auch synonym verwendet. Automatisierungslösungen für technische Prozesse werden mit zunehmender Leistungsfähigkeit der jeweiligen Automatisierungshardware und der zunehmenden Integration von einzelnen Steuerungs- oder Automatisierungsinseln in ein Steuerungs- oder Automatisierungskonzept für eine Gesamtanlage stetig komplexer. Entsprechend sind Hilfsmittel, die einen Benutzer bei der Erstellung oder Wartung solcher Automatisierungslösungen unterstützen, hilfreich.

Zur Benutzerunterstützung im Umfeld Daten verarbeitender Geräte sind so genannte Hilfetexte in vielfältigsten Ausprägungen bekannt geworden. Eine besonders einfache Form eines solchen Hilfetextes besteht darin, dass ein Computerprogramm mit einem bestimmten Parameter aufgerufen wird, das daraufhin eine textuelle Beschreibung seiner Funktionalität auf einem Ausgabegerät zurückliefert. Der Benutzer muss sich dann anhand der von dem Computerprogramm bereitgestellten Funktionalität die für ihn passende Funktion und die dafür vorgesehenen Spezifika beim Aufruf des Computerprogramms heraussuchen und einen entsprechenden Aufruf des Computerprogramms vornehmen. Während eine solche Hilfefunktion üblicherweise global die komplette Funktionalität eines Computerprogramms darstellt, sind mittlerweile kontextbezogene Hilfen bekannt geworden, bei denen der Benutzer, während er mit einem Computerprogramm arbeitet, z. B. durch Betätigen einer bestimmten Taste die Hilfefunktion aufruft, woraufhin das Computerprogramm in Ansehung der momentan vom Benutzer verwendeten Funktionalität des Computerprogramms Informationen zu dieser Funktionalität als Hilfe ausgibt. Dem Computerprogramm kann dazu eine Mehrzahl unterschiedlicher Hilfetexte zugeordnet sein, wobei ein Aufruf der Hilfefunktion in einer bestimmten Bearbeitungssituation jeweils mit genau einem Hilfetext assoziiert ist und entsprechend die Aktivierung der Hilfefunktion die Darstellung des entsprechenden Hilfetextes bewirkt. Bei einer Mehrzahl von Hilfetexten können diese untereinander, z. B. über Hyperlinks oder dergleichen, verknüpft sein, so dass der Benutzer, wenn ein zunächst dargestellter Hilfetext nicht die benötigte Information umfasst, ggf. durch Nachverfolgen solcher Verknüpfungen weitere Informationen erhalten kann, so dass sich durch aktives Sammeln von Informationen ggf. ein Anhalt in Bezug auf eine Lösung der jeweils vorliegenden Problematik ergeben kann.

Nachteilig bei solchen bekannten Lösungen ist vor allem, dass es sich bei solchen Hilfetexten um statische Informationen handelt, die zwar ggf. auch nach Erstellung des jeweils zugrunde liegenden Computerprogramms gepflegt und verändert werden können, aber stets nur auf den Erkenntnishorizont des die Hilfetexte bearbeitenden Benutzers abstellen. Zu einer Problematik, an die bei der Abfassung der Hilfetexte nicht gedacht ist, wird ein Benutzer also keine Informationen finden.

Eine Aufgabe der Erfindung besteht entsprechend darin, Hilfefunktionen der o.g. Art so zu erweitern, dass dynamisch Bezug auf das jeweilige Computerprogramm, hier also das Steuerungsprogramm, genommen werden kann.

Erfindungsgemäß wird diese Aufgabe mit einem Verfahren mit den Merkmalen des Anspruchs 1 gelöst. Dabei wird aus einer Datenbasis in Ansehung des Steuerungsprogramms eine Einstiegsfragenliste geladen und dem Benutzer zur Auswahl präsentiert. Der Benutzer kann daraufhin einen Eintrag aus der Einstiegsfragenliste als Einstiegsfrage auswählen. Auf eine solche Auswahl wird in Ansehung der Einstiegsfrage zumindest eine dynamische Information in Bezug auf das Steuerungsprogramm geladen oder generiert und dem Benutzer zur Ansicht, weiteren Auswahl oder dergleichen präsentiert. Als dynamische Information wird hier und im Folgenden zumindest ein Datum aus dem Steuerungsprogramm oder in Bezug auf das Steuerungsprogramm verstanden.

Der Ansatz der Erfindung zielt auf den Erhalt von dynamischen Informationen in Bezug auf das jeweilige Steuerungsprogramm ab. Dies ist nicht zu verwechseln mit Daten, die ein Steuerungsprogramm in Bezug auf einen externen technischen Prozess ausgibt, wie z. B. bei der US-A-5,400,246. Gleichfalls ist die Art der Eingrenzung der relevanten dynamischen Informationen, wie dies die Erfindung durch Einstiegsfragenliste und dazu geladenen dynamischen Informationen in Bezug auf das Steuerungsprogramm lehrt, nicht mit einer an sich bekannten menuegestützten Benutzerführung zu verwechseln, bei der in einem Hauptmenue eine Auswahl getroffen und danach in Abhängigkeit von der Auswahl andere Menues dargestellt werden oder Datenausgaben erfolgen, was beides keinerlei Information "in Bezug auf das Steuerungsprogramm" darstellt.

Das o.g. Verfahren ist selbst ein Computer- oder Steuerungsprogramm und entsprechend in Software implementiert. Es ist entweder Bestandteil des Steuerungsprogramms oder wird parallel oder neben dem Steuerungsprogramm, ggf. auch auf unterschiedlicher Hardware, ausgeführt. Die Implementierung des Verfahrens in Software, also auf einer ersten Abstraktionsstufe das Laden und Präsentieren der Einstiegsfragenliste und der Zugriff auf das Steuerungsprogramm in Ansehung der daraus ausgewählten Einstiegsfrage, ist statisch, wohingegen die Einstiegsfragenliste und/oder die in Ansehung der Einstiegsfrage aus dem Steuerungsprogramm ermittelten Informationen dynamisch sind, insofern, als sich das Verfahren für grundsätzlich beliebige Steuerungsprogramme eignet und z. B. dieselbe Einstiegsfrage bei einer Anwendung auf ein erstes Steuerungsprogramm erste dynamische Informationen und bei Anwendung auf ein zweites Steuerungsprogramm zweite dynamische Informationen liefert.

Von dem Ansatz gemäß der Erfindung umfasst ist auch eine Kombination mit bisherigen Ansätzen, z. B. derart, dass, wenn auf eine bestimmte Einstiegsfrage dem Benutzer eine Liste der im Steuerungsprogramm verwendeten Variablen zurückgeliefert wird, zu jeder Variablen z. B. deren Typ angezeigt wird und zur Erläuterung unterschiedlicher Typinformationen ein Zugriff auf statische Hilfetexte möglich ist.

Im Unterschied zu den oben skizzierten, als im Stand der Technik bereits bekannt vorgestellten Funktionalitäten zur Benutzerunterstützung, bei denen ein statisches Hilfeprogramm statische Hilfetexte liefert, sind bei dem Ansatz gemäß der Erfindung die jeweils erhältlichen Informationen direkt auf das jeweils untersuchte Steuerungsprogramm bezogen. Die erhaltenen Informationen sind für den jeweiligen Benutzer also sehr viel konkreter und können entsprechend zielgerichtet zur Lösung des jeweiligen Problems beitragen.

Weitere Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass als dynamische Information in Bezug auf das Steuerungsprogramm eine auf dieses bezogene Objektliste geladen oder generiert und dem Benutzer zur Auswahl präsentiert wird, wobei auf eine Auswahl eines Einstiegsobjekts aus der Objektliste in Ansehung einer logischen Kombination in Bezug auf Einstiegsfrage und Einstiegsobjekt eine auf das Steuerungsprogramm bezogene Datenliste geladen oder generiert und dem Benutzer zur Auswahl präsentiert wird. Die auf diese Weise erhaltene Datenliste umfasst schließlich Daten, die in Bezug auf die Einstiegsfrage und das Einstiegsobjekt den Benutzer beim Auffinden von Zusammenhängen im Steuerungsprogramm unterstützt. Auf diese Weise ist als dynamische Information auf jeweils eine Einstiegsfrage eine Objektliste erhältlich, die im Steuerungsprogramm tatsächlich verwendete Elemente, nämlich Objekte, also Softwareobjekte, umfasst.

Weiter bevorzugt ist vorgesehen, dass im Wege einer Auffassung eines durch den Benutzer ausgewählten Datums aus der Datenliste als Einstiegsobjekt das Verfahren in quasi rekursiver Art fortgesetzt wird, um Zusammenhänge in dem Steuerungsprogramm genauer zu analysieren oder genauer analysieren zu können.

Wenn sich die Einstiegsfrage oder die Einstiegsfragenliste aufgrund einer Fehlermeldung ergibt, kann sogar die Formulierung oder Auswahl der Einstiegsfrage oder der Einstiegsfragenliste dynamisch erfolgen und der Benutzer wird sofort zu den für ihn relevanten Aspekten innerhalb der durch das Verfahren ermöglichten Unterstützung geführt. Besonders bevorzugt ist dabei vorgesehen, dass sich die Fehlermeldung aufgrund einer Plausibilitätsprüfung ergibt, so dass das Verfahren z. B. auch beim Erstellen von Steuerungsprogrammen der o.g. Art verwendbar ist, wenn es darum geht, in komplexen Strukturen von im Steuerungsprogramm verwendeten oder zur Verwendung vorgesehenen Daten und Objekten Zusammenhänge und/oder Abhängigkeiten zu erkennen.

Um den Bezug zwischen den nach dem Verfahren gelieferten dynamischen Informationen und dem jeweiligen Steuerungsprogramm noch konkreter herzustellen, ist vorgesehen, dass Bezeichner oder dergleichen, die in der Einstiegsobjektliste und/oder der Datenliste angezeigt werden, den im Steuerungsprogramm verwendeten Bezeichnern entsprechen. Auf diese Weise sind anhand der von der Einstiegsobjektliste oder der Datenliste umfassten Objekte direkt Elemente, Objekte oder Daten aus dem Steuerungsprogramm identifizierbar, die mit der Einstiegsfrage und dem Einstiegsobjekt in Beziehung stehen, so dass diese bereits tatsächliche Elemente des Steuerungsprogramms repräsentieren und insoweit beim Auffinden von Zusammenhängen unterstützen oder das Auffinden weiterer Zusammenhänge fördern, indem diese als Ausgangspunkt für weitere Konkretisierungen herangezogen werden.

Bevorzugt ist vorgesehen, dass die Einstiegsfragenliste einerseits Einstiegsfragen und andererseits zu jeder Einstiegsfrage jeweils zumindest einen Einstiegsfragenparameter umfasst. Der Einstiegsfragenparameter bildet einen Inhalt der jeweiligen Einstiegsfrage, also deren sachlichen Gehalt, auf im Steuerungsprogramm verwendete oder verwendbare Objekte und/oder Daten ab. Wenn also als Einstiegsfrage z. B. formuliert ist "Welche Objekte sind vom Steuerungsprogramm umfasst?", ergibt sich aus den Schlüsselworten "Objekt" und "Steuerungsprogramm", dass sich die Einstiegsfrage auf das komplette Steuerungsprogramm und dort auf die darin verwendeten Objekte bezieht. Als Ergebnis werden also sämtliche im Steuerungsprogramm instanziierten Objekte zurückgeliefert. Andere, konkretere Einstiegsfragen könnten lauten "Welche Zahlen werden im Steuerungsprogramm verwendet?", wobei das Schlüsselwort "Zahl" aus der Menge der insgesamt im Steuerungsprogramm verwendeten Objekte diejenigen Objekte herausnimmt, die keine Zahlen repräsentieren, so z. B. Objekte, die mit Textdarstellung und -verarbeitung assoziiert sind oder dergleichen.

Gemäß einer bevorzugten Ausführungsform ist z. B. im Hinblick auf eine verbesserte Verfügbarkeit der Einstiegsfragenliste vorgesehen, dass diese unabhängig vom Steuerungsprogramm gespeichert ist. Besonders bevorzugt ist in diesem Zusammenhang vorgesehen, dass die Einstiegsfragenliste auch unabhängig vom Steuerungsprogramm veränderlich ist, so dass sie sich besonders leicht aktualisieren lässt.

Weiter bevorzugt ist vorgesehen, dass die Einstiegsfragenliste in einem sowohl strukturierten als auch für einen menschlichen Benutzer lesbaren Format, insbesondere XML, gespeichert oder speicherbar ist. Ein solches Format erleichtert die Pflege oder ggf. nachträgliche Änderung oder Ergänzung der Einstiegsfragenliste für den Benutzer und ermöglicht gleichzeitig deren automatische Interpretation durch ein Computerprogramm, mit dem das Verfahren implementiert ist, indem die Struktur bei der Auflösung syntaktischer oder semantischer Beziehungen hilft und die automatische Auswertung insofern erleichtert.

Wie bereits erwähnt, ist das Verfahren der oben skizzierten und nachfolgend näher beschriebenen Art zur Implementierung in Software vorgesehen, so dass die Erfindung auch ein Computerprogramm mit durch einen Computer ausführbaren Programmcodeanweisungen zu dessen Implementierung umfasst. Ebenfalls betrifft die Erfindung ein Computerprogrammprodukt, insbesondere ein Speichermedium, wie z. B. Speicherbausteine, Disketten oder dergleichen, mit einem durch einen Computer ausführbaren Computerprogramm zur Implementierung des Verfahrens.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Einander entsprechende Gegenstände oder Elemente sind in allen Figuren mit den gleichen Bezugszeichen versehen.

Darin zeigen
- FIG 1: ein Automatisierungssystem zur Steuerung und/oder Überwachung eines technischen Prozesses,
- FIG 2: eine exemplarische Darstellung eines Dialogs, wie er sich bei der Anwendung des Verfahrens gemäß der Erfindung ergeben kann und
- FIG 3: eine schematisch vereinfachte Darstellung von Zusammenhängen und Abhängigkeiten bei der Ausführung des Verfahrens.

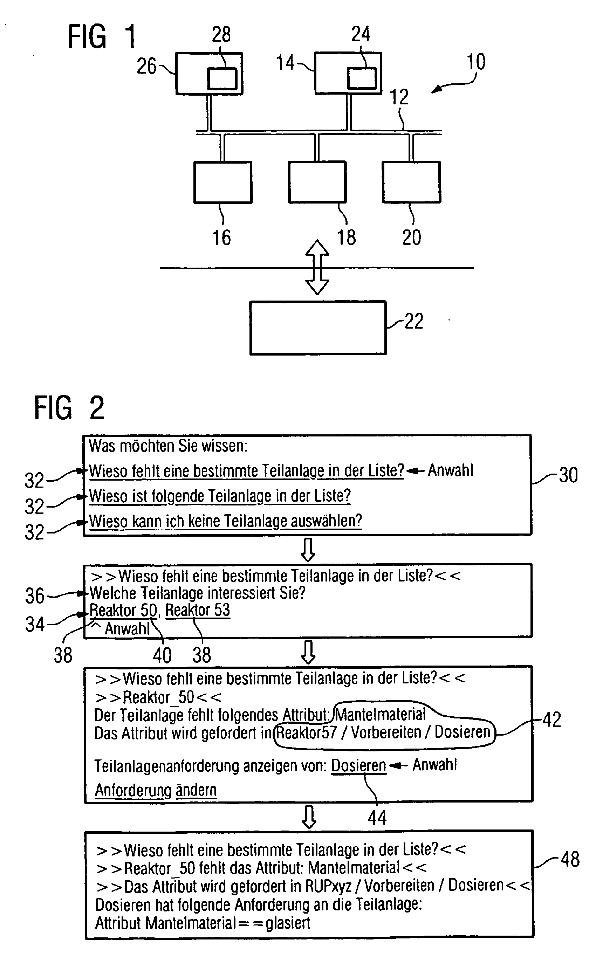

FIG 1 zeigt in schematisch vereinfachter Form ein insgesamt mit 10 bezeichnetes Automatisierungssystem, in dem eine Anzahl von über einen Bus 12 kommunikativ verbundenen Automatisierungsgeräten 14, 16, 18, 20 zusammengefasst sind, wobei das Automatisierungssystem 10 zur Steuerung und/oder Überwachung eines ebenfalls nur schematisch dargestellten technischen Prozesses 22 vorgesehen ist. Zu diesem Zweck ist dem Automatisierungssystem 10 als Automatisierungslösung zur Steuerung und/oder Überwachung des technischen Prozesses 22 ein Steuerungsprogramm 24 zugeordnet, das durch eines oder mehrere der von dem Automatisierungssystem 10 umfassten Automatisierungsgeräte 14, 16, 18, 20 ausgeführt wird oder ausführbar ist.

Der Begriff Automatisierungsgerät umfasst dabei sämtliche Geräte, Einrichtungen oder Systeme, also neben z. B. Steuerungen, wie speicherprogrammierbaren Steuerungen, Prozessrechnern, (Industrie-)Computern, dezentralen Peripheriegeräten, Bedien- und Beobachtungsgeräten und dergleichen auch Antriebs- oder sonstige Aggregatsteuerungen, Frequenzumrichter und Ähnliches, wie sie zur Steuerung, Regelung und/oder Überwachung technologischer Prozesse, z. B. zum Umformen oder Transportieren von Material, Energie oder Information etc., eingesetzt werden oder einsetzbar sind, wobei insbesondere über geeignete technische Einrichtungen, wie z. B. Sensoren oder Aktoren, Energie aufgewandt oder gewandelt wird. Als Automatisierungsgeräte werden dabei auch solche Kommunikationsteilnehmer in einem Automatisierungssystem aufgefasst, die nicht unmittelbar mit dem jeweiligen technischen Prozess interagieren, sondern z. B. zu Diagnosezwecken oder für Bedien- und Beobachtungsfunktionen, ggf. auch nur temporär, Bestandteil des Automatisierungssystems sind.

Das Verfahren zum Betrieb eines Automatisierungsgerätes 14, 16, 18, 20 ist bevorzugt in Software implementiert und wird entweder durch eines der Automatisierungsgeräte 14, 16, 18, 20 oder durch ein dem Automatisierungssystem 10 zumindest zeitweise zugeordnetes Bediengerät 26 ausgeführt. Eine softwaremäßige Implementation des Verfahrens gemäß der Erfindung wird auch als "Wizard" 28 bezeichnet und ist schematisch vereinfacht in einer dem Bediengerät 26 zugeordneten Art und Weise eingezeichnet. Das Bediengerät 26 kann dabei auf das Automatisierungssystem 10 und die davon umfassten Automatisierungsgeräte 14, 16, 18, 20, insbesondere über den Bus 12, zugreifen, so dass das Steuerungsprogramm 24 zum Erhalt dynamischer Informationen erreichbar ist.

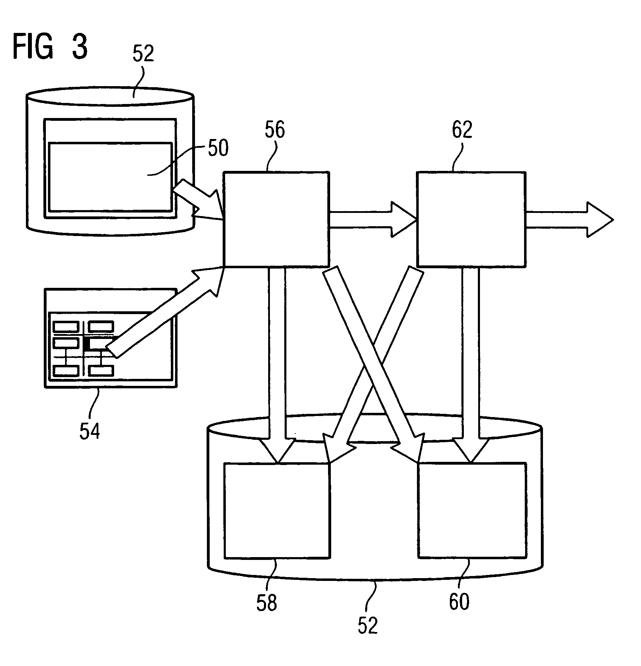

Weitere Einzelheiten werden im Folgenden anhand von FIG 2 und FIG 3 erläutert.

FIG 2 zeigt exemplarisch eine Einstiegsfragenliste 30 mit einer Anzahl von Einstiegsfragen 32, also z. B. "Wieso fehlt eine bestimmte Teilanlage in der Liste?", "Wieso ist folgende Teilanlage in der Liste?", "Wieso kann ich keine Teilanlage auswählen?", usw. Die Einstiegsfragenliste 30 wird dem Benutzer (nicht dargestellt) in an sich bekannter Art und Weise, z. B. in einem Dialog an einem Ausgabegerät wie einem Bildschirm, zur Auswahl präsentiert. In dem in FIG 2 dargestellten Beispiel wird davon ausgegangen, dass der Benutzer aus der Einstiegsfragenliste 30 den Eintrag mit der Formulierung "Wieso fehlt eine bestimmte Teilanlage in der Liste?" als Einstiegsfrage 32 ausgewählt hat. Auf diese Auswahl der Einstiegsfrage 32 in der Einstiegsfragenliste 30 durch den Benutzer wird in Ansehung der jeweiligen Einstiegsfrage 32 eine dynamische Information in Bezug auf das Steuerungsprogramm 24 (FIG 1) geladen. Die dynamische Information umfasst im dargestellten Beispiel die Auflistung von Bezeichnern, die im Steuerungsprogramm 24 Teilanlagen repräsentieren und insoweit als "Antwort" auf die ausgewählte Einstiegsfrage 32 angesehen werden können. Als dynamische Information in Bezug auf das Steuerungsprogramm 24 wird also eine auf das Steuerungsprogramm 24 bezogene Objektliste 34 geladen oder generiert und dem Benutzer zur Auswahl präsentiert. Die Objektliste 34, hier "Reaktor 50", "Reaktor 53", kann durch eine Überschrift 36, hier "Welche Teilanlage interessiert Sie?", ergänzt sein, so dass durch die Überschrift 36 zusätzlich die Information transportiert wird, dass von der Objektliste 34 umfasste Objekte 38, also "Reaktor 50" oder "Reaktor 53", aus dem Steuerungsprogramm 24 unter dem Aspekt "Teilanlage" abgeleitet wurden. Anhand der Objektliste 34 konkretisiert der Benutzer seinen Informationsbedarf durch Auswahl eines der davon umfassten Objekte 38 als Einstiegsobjekt 40 weiter. In Ansehung einer logischen Kombination in Bezug auf Einstiegsfrage 32 und Einstiegsobjekt 40 wird eine auf das Steuerungsprogramm 24 bezogene Datenliste 42 geladen oder generiert und dem Benutzer zur Auswahl präsentiert. Die Datenliste 42 umfasst dabei Daten, die in Bezug auf die Einstiegsfrage 32 und das Einstiegsobjekt 40 den Benutzer beim Auffinden von Zusammenhängen im Steuerungsprogramm 24 unterstützen.

Das Verfahren kann im Sinne einer noch genaueren Analyse von Zusammenhängen im Steuerungsprogramm 24 fortgesetzt werden, wenn ein durch den Benutzer aus der Datenliste 42 ausgewähltes Datum 44, hier z. B. "Dosieren", als Einstiegsobjekt 40 oder weiteres Einstiegsobjekt aufgefasst wird. Im Rahmen des Verfahrens wird dann durch Generierung einer weiteren Datenliste 42 in Ansehung einer logischen Kombination in Bezug auf die Einstiegsfrage 32 und das weitere Einstiegsobjekt, hier dem Datum 44 "Dosieren", ggf. in Bezug auf Einstiegsfrage 32, Einstiegsobjekt 40 und das vorgenannte weitere Einstiegsobjekt, eine auf das Steuerungsprogramm 24 bezogene (weitere) Datenliste geladen oder generiert und dem Benutzer zur Auswahl präsentiert, um Zusammenhänge im Steuerungsprogramm genauer zu analysieren, wie dies in einem anschließenden Dialog 48 in FIG 2 skizziert ist.

FIG 3 zeigt dazu eine schematisch vereinfachte Übersicht zur Verdeutlichung von Abläufen bei der Ausführung des Verfahrens gemäß der Erfindung. Die Einstiegsfragenliste 30 oder die Einstiegsfrage 32 kann sich aufgrund einer Fehlermeldung, insbesondere einer Fehlermeldung aufgrund einer Plausibilitätsprüfung 50, ergeben. Die Übernahme eines Ergebnisses aus der Plausibilitätsprüfung 50 kann als Übernahme aus einer Datenbasis 52 aufgefasst werden. Die Datenbasis 52, also eine Datenbank oder jede sonstige Sammlung von Daten, umfasst dann entweder ein Programm zur Plausibilitätsprüfung 50 oder Ergebnisse eines solchen Programms. Ebenso kann das Steuerungsprogramm 24 (FIG 1) im weitesten Sinne als Datenbasis 52 aufgefasst werden. Weiterhin kommt in Betracht, die Einstiegsfragenliste 30 als Datenbasis 52 aufzufassen. Zugriffe auf das Steuerungsprogramm 24 als Datenbasis 52 können auch Zugriffe über eine so genannte API-Schnittstelle umfassen. Die Einstiegsfragenliste 30 kann insbesondere mit dem Steuerungsprogramm 24 kombiniert oder in sonst geeigneter Art und Weise assoziiert sein. Wichtig im Zusammenhang mit dem so verdeutlichten Startpunkt für das Verfahren gemäß der Erfindung ist, dass dieses auf dynamischen Daten, also z. B. der Plausibilitätsmeldung 50, dem veränderlichen und insbesondere auch austauschbaren Steuerungsprogramm 24 und/oder der veränderlichen und insbesondere mit einem ausgetauschten Steuerungsprogramm ebenfalls austauschbaren Einstiegsfragenliste 30, basiert.

Wenn als Einstieg für das Verfahren eine Plausibilitätsmeldung 50 vorgesehen ist, ergibt sich üblicherweise aus der Ursache, die zur Plausibilitätsmeldung 50 geführt hat, also dem Aspekt, an dem eine Plausibilitätskontrolle gescheitert ist, zumindest eine Einstiegsfrage 32. Wenn der Benutzer das Verfahren ohne eine solche Plausibilitätsmeldung 50 oder dergleichen startet, ergibt sich üblicherweise eine Einstiegsfragenliste 30 mit einer Mehrzahl von Einstiegsfragen 32. Als dynamische Information in Bezug auf das in FIG 3 durch ein Rezeptfenster 54 veranschaulichte Steuerungsprogramm 24 wird die auf das Steuerungsprogramm 24 bezogene Objektliste 34 (FIG 2) geladen. Bei nur einer Einstiegsfrage 32 aufgrund einer Plausibilitätsmeldung 50 kann in einem ersten Dialog 56 in Ansehung der dadurch definierten Einstiegsfrage 32 die auf das Steuerungsprogramm 24 bezogene Objektliste 34 geladen oder generiert und dem Benutzer zur Auswahl präsentiert werden. Im Zusammenhang mit dem ersten Dialog 56 erfolgt optional ein Zugriff auf eine Datenbasis 52, bei der es sich um die gleiche Datenbasis 52 handeln kann, die bereits beschrieben wurde und die in FIG 3 nur aus Gründen der Übersichtlichkeit erneut dargestellt ist. Die Datenbasis 52 umfasst danach insbesondere einen ersten Datenbestand 58 in Form von z. B. Rezeptdaten, Bibliotheksdaten und dergleichen und einen zweiten Datenbestand 60 in Form von Fragen, Fragenvorlagen und dergleichen. Mit dem Zugriff auf diese Datenbestände 58, 60 kann der erste Dialog 56 konkretisiert werden, so dass die Objektliste 34 im Steuerungsprogramm 24 verwendete oder verwendbare Objekte und/oder Daten abbildet. Mit dem Zugriff auf Fragen oder Fragenvorlagen kann das Verfahren sinnvoll fortgesetzt werden, indem an die Stelle einer ersten Einstiegsfrage 32 eine weitere Einstiegsfrage tritt, wenn nicht eine Fortsetzung des Verfahrens dadurch gewählt wird, dass ein aus der Objektliste 34 ausgewähltes oder auswählbares Objekt 38 als Einstiegsobjekt 40 aufgefasst wird und dazu in einem zweiten Dialog 62 in Ansehung einer logischen Kombination in Bezug auf Einstiegsfrage 32 und Einstiegsobjekt 40 eine auf das Steuerungsprogramm 24 bezogene Datenliste 42 dem Benutzer präsentiert wird. Das Verfahren lässt sich in dieser Hinsicht quasi rekursiv fortsetzen, um Zusammenhänge in dem Steuerungsprogramm 24 immer genauer zu analysieren.

Zusammenfassend lässt sich das Verfahren gemäß der vorliegenden Erfindung kurz wie folgt darstellen: "Wizard"-ähnliche, vorgegebene Navigationspfade, angereichert mit und gesteuert durch Daten 30, 34, 42 in Bezug auf das Steuerungsprogramm 24, ermöglichen eine neue Art der Untersuchung komplexer Datenstrukturen. Wenn die jeweilige Anwendung, also insbesondere das Steuerungsprogramm 24, die Daten auch über Schnittstellen, insbesondere ein definiertes Format, z. B. XML, zur Verfügung stellt, ergibt sich auch die Möglichkeit einer projekt- oder kundenspezifischen Erweiterbarkeit solcher Navigationspfade. Als Navigationspfad wird dabei hier das Laden dynamischer Information in Bezug auf das Steuerungsprogramm 24 in Ansehung entweder einer Einstiegsfrage 32, eines Einstiegsobjekts 40 oder eines Datums 42 verstanden. Im Unterschied zu bekannten Verfahren bei der Benutzerunterstützung, z. B. so genannten Hilfetexten, die zur Unterscheidung als "statisch" bezeichnet werden, sind die Navigationspfade entsprechend dem Ansatz gemäß der Erfindung dynamisch, weil sie nicht durch das Verfahren selbst oder dessen Implementation in Software festgelegt sind, sondern voll und ganz auf dem jeweiligen Steuerungsprogramm 24, das für sich genommen veränderlich und im Übrigen auch gegen ein anderes Steuerungsprogramm jederzeit austauschbar ist, oder einer veränderlichen Einstiegsfragenliste 30 und in einer solchen Einstiegsfragenliste 30 mit jeweils einer Einstiegsfrage 32 assoziierten Einstiegsfragenparametern beruhen, die einen Inhalt der jeweiligen Einstiegsfrage 30 auf im jeweiligen Steuerungsprogramm 24 verwendete oder verwendbare Objekte und/oder Daten abbildet.

## Patentansprüche

1. Verfahren zum Betrieb eines Automatisierungsgerätes zum Erhalt von Informationen zu einem als Automatisierungslösung zur Steuerung und/oder Überwachung eines technischen Prozesses (22) vorgesehenen Steuerungsprogramm (24), **gekennzeichnet durch** folgende Schritte:
- aus einer Datenbasis (52) wird in Ansehung des Steuerungsprogramms (24) eine Einstiegsfragenliste (30) geladen und dem Benutzer zur Auswahl präsentiert;
- auf eine Auswahl einer Einstiegsfrage (32) in der Einstiegsfragenliste (30) **durch** den Benutzer wird in Ansehung der Einstiegsfrage (32) als dynamische Information zumindest eine auf das Steuerungsprogramm (24) bezogene Objektliste (34), die im Steuerungsprogramm (24) verwendete oder verwendbare Objekte und/oder Daten in Form der dafür im Steuerungsprogramm (24) verwendeten Bezeichner abbildet, geladen oder generiert und dem Benutzer zur Auswahl präsentiert.

2. Verfahren nach Anspruch 1,
- wobei auf eine Auswahl eines Einstiegsobjekts (40) aus der Objektliste (34) durch den Benutzer in Ansehung einer logischen Kombination in Bezug auf Einstiegsfrage (32) und Einstiegsobjekt (40) eine auf das Steuerungsprogramm (24) bezogene Datenliste (42) geladen oder generiert und dem Benutzer zur Auswahl präsentiert wird und
- wobei die Datenliste (42) Daten umfasst, die in Bezug auf die Einstiegsfrage (32) und das Einstiegsobjekt (40) den Benutzer beim Auffinden von Zusammenhängen im Steuerungsprogramm (24) unterstützen.

3. Verfahren nach Anspruch 2, das im Wege der Auffassung eines durch den Benutzer ausgewählten Datums (44) aus der Datenliste (42) als Einstiegsobjekt (40) fortgesetzt wird, um Zusammenhänge in dem Steuerungsprogramm (24) genauer zu analysieren.

4. Verfahren nach Anspruch 1, 2 oder 3, wobei sich die Einstiegsfrage (32) oder die Einstiegsfragenliste (30) aufgrund einer Fehlermeldung ergibt.

5. Verfahren nach Anspruch 4, wobei sich die Fehlermeldung aufgrund einer Plausibilitätsprüfung ergibt.

6. Verfahren nach einem der vorangehenden Ansprüche, wobei der Einstiegsfragenliste (30) Einstiegsfragen (32) einerseits und jeweils zumindest einem Einstiegsfragenparameter andererseits, der einen Inhalt der jeweiligen Einstiegsfrage (32) auf im Steuerungsprogramm (24) verwendete oder verwendbare Objekte und/oder Daten abbildet, zugeordnet sind.

7. Verfahren nach Anspruch 6, wobei die Einstiegsfragenliste (30) unabhängig vom Steuerungsprogramm (24) gespeichert ist.

8. Verfahren nach Anspruch 6 oder 7, wobei die Einstiegsfragenliste (30) unabhängig vom Steuerungsprogramm (24) veränderlich ist.

9. Verfahren nach Anspruch 8, wobei die Einstiegsfragenliste (30) in einem sowohl strukturierten als auch für einen menschlichen Benutzer lesbaren Format, insbesondere XML, gespeichert ist.

## Claims

1. Method for operating an automation device for obtaining information about a control program (24) provided as an automation solution for control and/or monitoring of a technical process (22),
**characterised by** the following steps:
- A list of initial questions (30) in respect of the control program (24) is loaded from a database (52) and presented to the user for selection;
- On selection of an initial question (32) in the list of initial questions (30) by the user, in respect of the initial question (32), at least one object list (34) related to the control program (24) which maps objects and/or data used or able to be used in the control program (24) in the form of the labels used for them in the control program (24), is loaded or generated and presented to the user as dynamic information for selection.

2. Method according to claim 1,
- whereby, on selection of an initial object (40) from the object list (34) by the user in respect of a logical combination in relation to initial question (32) and initial object (40), a data list (42) related to the control program (24) is loaded or generated and presented to the user for selection and
- whereby the data list (42) includes data which, in relation to the initial question (32) and the initial object (40), support the user in finding relationships in the control program (24).

3. Method according to claim 2 that, by way of interpreting an item of data (44) selected by the user from the data list (42) is continued as the initial object (40) in order to more accurately analyse relationships in the control program (24).

4. Method according to claim 1, 2 or 3, whereby the initial question (32) or the list of initial questions (30) is produced as the result of an error message.

5. Method according to claim 4, whereby the error message is produced as a result of a plausibility check.

6. Method according to one of the previous claims, whereby the list of initial questions (30) is assigned initial questions (32) on the one hand and in each case at least one initial question parameter on the other hand which maps a content of the respective initial question (32) onto objects and/or data used or able to be used in the control (24).

7. Method according to claim 6, whereby the list of initial questions (30) is stored independently from the control program (24).

8. Method according to claim 6 or 7, whereby the list of initial questions (30) is able to be changed independently from the control program (24).

9. Method according to claim 8, whereby the list of initial questions (30) is stored in both a structured format and also in a format readable by a human user, especially XML.

## Revendications

1. Procédé pour faire fonctionner un appareil d'automatisation pour obtenir des informations sur un programme (24) de commande prévu comme solution d'automatisation pour la commande et/ou le contrôle d'un processus ( 22 ) technique,
**caractérisé par** les stades dans desquels
- on charge à partir d'une base (52) de données, en considération du programme (24) de commande, une liste ( 30 ) de questions d'entrée et on les donne à choisir à l'utilisateur ;
- après que l'utilisateur a choisi une question ( 32 ) d'entrée dans la liste ( 30 ) de questions d'entrée, on charge ou on produit et on donne à choisir à l'utilisateur, en considération de la question (32) d'entrée, comme information dynamique, au moins une liste ( 34 ) d'objets se rapportant au programme ( 24 ) de commande et reproduisant, sous la forme des indicateurs utilisés à cet effet dans le programme ( 24 ) de commande, les objets et/ou les données utilisés ou pouvant être utilisés dans le programme ( 24 ) de commande.

2. Procédé suivant la revendication 1,
- dans lequel, après que l'utilisateur a choisi un objet ( 40 ) d'entrée parmi la liste ( 34 ) d'objets, on charge ou on produit et on donne à choisir à l'utilisateur, en considération d'une combinaison logique se rapportant à une question ( 32 ) d'entrée et à un objet ( 40 ) d'entrée, une liste ( 40) de données rapportée au programme ( 24 ) de commande et
- dans lequel la liste ( 42 ) de données comprend des données, qui, en relation avec la question ( 32 ) d'entrée et avec l'objet ( 40 ) d'entrée, rendent plus facile à l'utilisateur de trouver des relations dans le programme (24) de commande.

3. Procédé suivant la revendication 2, qui, au cours de l'interprétation d'une donnée ( 44 ) choisie par l'utilisateur comme objet ( 40 ) d'entrée dans la liste ( 42 ) de données, se poursuit pour analyser plus précisément des relations dans le programme ( 24 ) de commande.

4. Procédé suivant la revendication 1, 2 ou 3, dans lequel la question ( 32 ) d'entrée ou la liste (30) de questions d'entrée est obtenue sur la base d'un message d'erreur.

5. Procédé suivant la revendication 4, dans lequel le message d'erreur est indiqué sur la base d'un contrôle de vraisemblance.

6. Procédé suivant l'une des revendications précédentes, dans lequel, à la liste (30) de questions d'entrée, sont associées des questions (32) d'entrée d'une part et respectivement au moins un paramètre de questions d'entrées d'autre part, qui reproduit un contenu de la question ( 32 ) respective sur des objets et/ou des données utilisés ou pouvant être utilisés dans le programme ( 24 ) de commande.

7. Procédé suivant la revendication 6, dans lequel on mémorise la liste ( 30 ) de questions d'entrée indépendamment du programme ( 24 ) de commande.

8. Procédé suivant la revendication 6 ou 7, dans lequel on peut modifier la liste ( 30 ) de questions d'entrée indépendamment du programme ( 24 ) de commande.

9. Programme suivant la revendication 8, dans lequel la liste ( 30 ) de questions d'entrée est mémorisée dans un format, notamment XML, à la fois structuré et pouvant être lu aussi par un utilisateur humain.
